# EUROPEAN PATENT APPLICATION

(11) **EP 4 667 335 A1**
(43) Date of publication of application: **24.12.2025**
(21) Application number: 23955333.2
(22) Date of filing: 12.12.2023
(51) Int. Cl.: B62D 57/02

(54) **ROLLING ROBOT**

(30) Priority: 10.10.2023 CN 202311301294
(71) Applicant: Luoteng (Hangzhou) Technology Co., Ltd., Hangzhou, Zhejiang 310018 (CN)
(72) Inventor: ZHANG, Bixuan, Hangzhou, Zhejiang 310018 (CN); LI, Guang, Hangzhou, Zhejiang 310018 (CN); WANG, You, Hangzhou, Zhejiang 310018 (CN); YE, Quan, Hangzhou, Zhejiang 310018 (CN)
(74) Representative: EIP
(86) International application number: PCT/CN2023/138051
(87) International publication number: WO 2025/076980

(57) **Abstract**

Disclosed in the present invention is a rolling robot, comprising: a housing, which is formed in the shape of a revolving body; two supporting hubs, which are fixed to two sides of the housing; a main supporting structural member, which extends horizontally in a left-right direction in the housing and is connected to the two supporting hubs by means of bearings at two ends of the main supporting structural member; a gravity pendulum, which is connected to the main supporting structural member and is swingable in the left-right direction; a rotating mass, which is rotatably connected to the main supporting structural member about a rotating axis extending horizontally in a front-back direction when the rolling robot is stationary; a main driving electric motor, which is configured to drive the main supporting structural member, the gravity pendulum and the rotating mass to rotate in the front-back direction; a gravity pendulum driving electric motor, which is configured to drive the gravity pendulum to swing in the left-right direction; and a rotating mass driving electric motor, which is configured to drive the rotating mass to rotate in the left-right direction. In the present invention, the control difficulty of the rolling robot is reduced, high-speed movement can be realized, and jitter of the rolling angle hardly occurs.

## Description

### CROSS-REFERENCE TO RELATED APPLICATIONS

The present disclosure claims the priority and benefits of the Chinese Patent Applications No. 202311301294.7, which was filed on October 10, 2023, the disclosure of which is incorporated herein by reference in its entirety as part of the present disclosure.

### TECHNICAL FIELD

The present disclosure relates to the technical field of robot, in particularly to a rolling robot.

### BACKGROUND

Rolling robot is a kind of mobile robot, which is a robot with a rotational body structure and drives the rotational body thereof to roll forward by a driving source. In some special and harsh environments, some traditional wheeled or legged robots are not competent for the work. Because of its own structural characteristics, the rolling robot has the advantages such as great flexibility, anti-interference and anti-toppling, which enables the rolling robot to move quickly under uneven and bad road conditions such as sand or grass. At the same time, the rolling robot seals the internal mechanism and most of the sensors in the spherical housing, which is a good isolation from external adverse environmental factors such as humidity and dust. The closed structure also makes the robot have certain amphibious ability. Compared with the legged robot, which consumes energy to maintain its attitude balance, the rolling robot can move only by changing the gravity center of the robot by driving the pendulum. The rolling robot can save a lot of energy and has strong endurance. The mounting platforms on both sides of the rolling robot can be loaded with different sensors or human-computer interaction devices according to actual needs, so as to expand its application scope and application field. With the deepening of research, the rolling robot will play an increasingly important role in the fields of life and entertainment, industrial agriculture, national defense security and so on. However, the dynamic model and kinematics model of the rolling robot are complex, and they are nonlinear, coupled and non-chained, which makes the stable motion control of the rolling robot a difficult problem.

The traditional design idea of rolling robot based on pendulum is to use two motors to pull the pendulum in two orthogonal directions (front-back direction and left-right direction), so that the rolling robot can move forward and backward, and turn. However, because there is only one pendulum, the forward and backward motions and the left and right motions cannot be separated, which leads to the strong coupling of the kinematics and dynamics model established on this basis and the extremely difficult control. At the same time, because the rolling robot touches the ground at a single point and is easy to shake, the rolling angle of the whole machine body is easily disturbed by the rugged ground in the process of moving forward, and its change will show periodic change, and the period is positively correlated with the moving speed. This leads to the model established at low speed is not applicable at high speed, which makes the model more complicated and the control difficulty rises linearly with the increase of speed. The complicated model makes it difficult for existing rolling robots to keep stable in high-speed motion.

Pendulum control design is a common motion mode of rolling robot, which has the advantage of simple actuator. However, in the stable control of rolling angle, the left-right swing of the pendulum and the steady lifting of the pendulum by a certain degree in the left-right direction both generate torques on the machine body, and the two effects are coupled with each other, and the lifting of the pendulum by a certain degree in the left-right direction will cause the machine body to tilt. Therefore, in the control, the influence of instantaneous torque caused by the swing of the pendulum and the periodic change of the rolling angle period of the machine body caused by speed can only be ignored, and the forward speed and the swing speed of the pendulum are reduced to obtain a controllable simplified model. However, the model is simplified, so it is not suitable for high-speed situation, and the steering ability is limited.

Further, the existing rolling robot has the following problems:
1) The housing of a rotational body, such as a sphere, an ellipsoid, a transverse drum, etc., forms point contact with the ground and is an unsteady structure. It can not only turn by actively changing the rolling angle, but also be easily shaken by the ground disturbance or the centrifugal force of turning. The faster the robot is, the more difficult it is to control the shaking.
2) The rolling robot moves forward and backward and turns by pulling the pendulum, but because there is only one pendulum, which will form coupling, which increases the control difficulty after the rolling robot starts to shake.

### SUMMARY

The purpose of the present disclosure is to provide a rolling robot with a compound control driving mode based on angular momentum conservation, so as to solve the control problem of stable high-speed motion and flexible steering of the rolling robot.

With respect to the abovementioned problems, the present disclosure provides a rolling robot, which includes: a housing, formed in a shape of a rotational body, a distance between an outer surface of a rolling surface of the housing and a rotation axis is gradually reduced from middle to two sides; two supporting hubs, fixed to the two sides of the housing, wherein outer surfaces of the two supporting hubs and the housing form a part of a rolling shape of the rolling robot; a main supporting member, extending horizontally in a left-right direction in the housing and connected to the two supporting hubs through bearings at two ends of the main supporting member, so that the housing and the two supporting hubs are capable of rotating relative to the main supporting member; a pendulum, connected to the main supporting member through a pendulum bracket which extends in a vertical direction when the rolling robot is stationary, the pendulum being swingable in the left-right direction relative to the main supporting member; a rotating mass, rotatably connected to the main supporting member with a rotation axis extending horizontally in a front-back direction when the rolling robot is stationary, the front-back direction being perpendicular to the left-right direction and the vertical direction; a main driving motor, configured to drive the main supporting member, the pendulum and the rotating mass to rotate in the front-back direction; a pendulum driving motor, configured to drive the pendulum to swing in the left-right direction relative to the main supporting member; and a rotating mass driving motor, configured to drive the rotating mass to rotate in the left-right direction relative to the main supporting member.

The rolling robot according to the present disclosure can include one or more technical features in the following.

According to an embodiment, the main driving motor is configured to change a front-back position of a mass center of the rolling robot by changing angles of the main supporting member, the pendulum and the rotating mass relative to the housing, so that the housing obtains a torque of rolling forward and backward and realize a front-back movement of the rolling robot; the pendulum driving motor is configured to change a left-right position of the mass center of the rolling robot by changing an angle of the pendulum relative to the main supporting structure and the housing; the rotating mass driving motor is configured to apply a torque in a rolling angle direction to the rolling robot by causing the rotating mass to undergo accelerating and decelerating rotations in a clockwise or counterclockwise direction, a change of the left-right position of the mass center of the robot and the accelerating and decelerating rotations in the clockwise or counterclockwise direction of the rotating mass work together to change a rolling angle of the robot, so as to achieve a rolling angle attitude control of the robot and achieve an attitude stability control of an arc turning and a linear motion of the rolling robot.

According to an embodiment, a shape of the rotating mass is rotationally symmetrical with respect to the rotation axis, a greater concentration of mass is distributed in portions farther from the rotation axis compared to portions closer to the rotation axis.

According to an embodiment, the rotating mass is formed in a form of a rigid wheel, which includes an annular ring arranged at a periphery and a plurality of spokes connecting the annular ring to the rotation axis.

According to an embodiment, a radius of a circumscribed sphere of the rotating mass is 30%-80% of a radius of a circumscribed sphere of the housing.

According to an embodiment, a mounting shaft of the rotating mass is on a median axial plane of the housing, a mounting height of the rotating mass is 30%-70% of a total height of the rolling robot, the mounting shaft defines the rotation axis.

According to an embodiment, the rotating mass is made of tool steel.

According to an embodiment, a lower end of the pendulum is arranged adjacent to a bottom surface of an inner wall of the housing.

According to an embodiment, a mass of the pendulum is more than 30% of a total mass of the rolling robot, a mass of the rotating mass is more than 5% of the total mass of the rolling robot.

According to an embodiment, the rolling robot further includes a power supply module for supplying power to the main driving motor, the pendulum driving motor and the rotating mass driving motor, wherein the power supply module is embedded in the pendulum as a part of the pendulum.

According to an embodiment, the rolling robot further includes an external cabin fixed to the main supporting member at an outer side of the supporting hubs, wherein the external cabin includes an external board and a shield fixed to the external board, the shield and the outer surfaces of the supporting hubs and the housing form the rolling shape of the rolling robot, the external cabin is provided with an external sensor, and the external sensor is selected from one or more selected from the group consisting of a GPS positioning module, a six-axis gyro attitude sensor module, a wheel speedometer, a camera, a laser radar, a millimeter wave radar, a built-in sensor is arranged in the housing, the built-in sensor is selected from one or more selected from the group consisting of a GPS positioning module, a six-axis gyro attitude sensor module and a wheel speedometer.

According to an embodiment, the housing has a left-right symmetrical structure, and the housing is formed into the following shapes or a part of the following shapes: a spherical shape, an ellipsoid shape, and a transverse drum shape.

Compared with the existing technology, the beneficial effects of the present disclosure include but are not limited to:
1. The present disclosure uses a rotating mass driven by a rotating mass driving motor as the input of torque. By leveraging the angular momentum conservation, a torque is applied to the rolling robot in the rolling angle direction, thereby enabling the robot to achieve centripetal acceleration relative to the inertial system. In addition to the existing control method in which the left-right position of the mass center of the rolling robot is changed by changing the angle of the pendulum relative to the main supporting member and the housing so as to change the rolling angle, the present disclosure introduces an additional control method. Both methods jointly influence the rolling angle. Moreover, the influence of the rotating mass on the rolling robot is highly singular and rapid, thereby allowing for linearization control and decoupling of the dynamic model and the kinematic model, significantly reducing the control complexity of such robots. Additionally, due to the superiority of the rotating mass to suppress high-frequency noise, the rolling robot can break through its original speed limitations, increasing its maximum speed by more than four times, reaching a speed close to 30 kilometers per hour, with virtually no rolling angle jitter.
2. The present disclosure updates the attitude of the rolling robot using the raw data obtained from a six-axis gyroscopic attitude sensor, combines the drive of the rotating mass with the drive of changing the position of the mass center of the pendulum by using front-back and left-right swinging, and controls the attitude of the rolling robot through control algorithms, so as to enable the rolling robot to achieve high-speed straight-line motion without jitter.
3. The present disclosure also coordinates the operation of each drive motor to drive the housing in different ways, and can achieve brief on-the-spot rotation or stable curved turning of the rolling robot by simultaneously adjusting the rotational speed of the rotating mass and the lifting height of the pendulum.

### BRIEF DESCRIPTION OF DRAWINGS

In order to explain the technical solution of the embodiment of the present disclosure more clearly, the attached drawings of the embodiments of the present disclosure will be briefly introduced below. Among them, the drawings are only used to show some embodiments of the present disclosure, and are not limited to all embodiments of the present disclosure.
Fig. 1 is a schematic diagram of a three-dimensional structure inside a rolling robot according to the present disclosure;
Fig. 2 is a front view of the outside of a rolling robot according to the present disclosure;
Fig. 3 is a schematic diagram of an exemplary structure of a rotating mass of a rolling robot according to the present disclosure;
Fig. 4 is a schematic diagram of a connection assembly of a rolling robot according to the present disclosure;
Fig. 5 is a schematic side view of a rotating mass driving assembly of the rolling robot according to the present disclosure.

In the figures: 1, housing; 2, main supporting member; 3, connection assembly; 31, hub connector; 32, supporting hub; 4, pendulum; 41, pendulum bracket; 5, rotating mass; 6, main driving assembly; 61, main driving motor; 62, main motor gear; 63, driving gear ring; 7, pendulum driving assembly; 71, pendulum driving motor; 72, pendulum motor gear; 73, pendulum gear ring; 8, rotating mass driving assembly; 81, rotating mass driving motor; 82, motor synchronous belt wheel; 83, synchronous belt; 84, transmission shaft synchronous belt wheel; 85, transmission shaft; 9, shaft sleeve; 10, power module; 11, light; 12, laser radar; 13, camera; 14, six-axis gyro attitude sensor module.

### DETAILED DESCRIPTION

In order to make the purpose, technical solution and advantages of the technical solution of the present disclosure more clear, the technical solution of the embodiment of the present disclosure will be described clearly and completely in the following with the attached drawings of specific embodiments of the present disclosure. Like reference numerals in the drawings represent like parts. It should be noted that the described embodiment is a part of the embodiment of the present disclosure, not the whole embodiment. Based on the described embodiments of the present disclosure, all other embodiments obtained by ordinary people in the field without creative labor belong to the scope of protection of the present disclosure.

Unless otherwise defined, technical terms or scientific terms used herein shall have their ordinary meanings as understood by people with ordinary skills in the field to which this invention belongs. The words "first", "second" and similar words used in the specification and claims of the patent application of the present disclosure do not indicate any order, quantity or importance, but are only used to distinguish different components. Similar words such as "including" or "containing" mean that the elements or objects appearing before the word cover the elements or objects listed after the word and their equivalents, without excluding other elements or objects. Similar words such as "connected" or "connected" are not limited to physical or mechanical connection, but can include electrical connection, whether direct or indirect. "Up", "Down", "Left" and "Right" are only used to indicate the relative positional relationship. When the absolute position of the described object changes, the relative positional relationship may also change accordingly.

The present disclosure will be described in detail below by describing example embodiments.

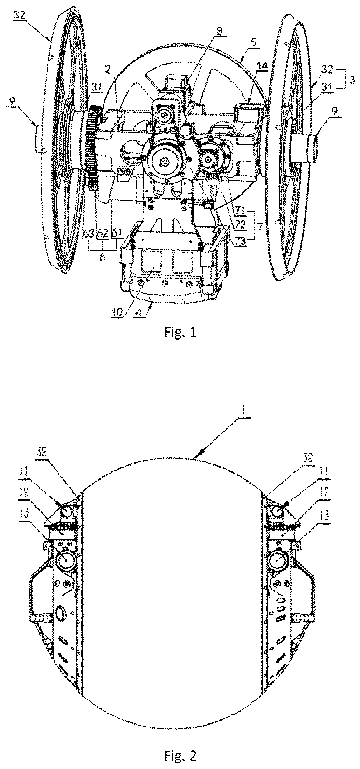

Referring to Figs. 1-2, according to the present disclosure, a rolling robot is provided, the rolling robot includes a housing 1 formed in the shape of a rotational body, and the distance between an outer surface of a rolling surface of the housing and a rotation axis is gradually reduced from the middle to both sides. Further, the housing 1 may include a left-right symmetrical structure. For example, the housing may be formed in the following shape or a part of the following shape: a spherical shape, an ellipsoidal shape, and a transverse drum shape.

The rolling robot also includes supporting hubs 32 fixed to two sides of the housing 1, and a main supporting member 2 extending horizontally in a left-right direction in the housing 1. For example, the housing 1 is provided with a positioning hole matched with the supporting hub 32, and the housing 1 and the supporting hub 32 are connected and fixed by screws through the positioning hole. Both ends of the main supporting member 2 are connected to two supporting hubs 32 through bearings, so that the housing 1 and the two supporting hubs 32 can rotate relative to the main supporting member 2. The outer surfaces of the supporting hubs 32 and the housing 1 constitute a rolling shape of the rolling robot.

The rolling robot may further include an external cabin fixed to the main supporting member 2 at an outer side of the supporting hubs 32. Specifically, the external cabin may include an external board and a shield fixed to the external board, the shield and the outer surfaces of the supporting hubs 32 and the housing 1 form the rolling shape of the rolling robot. However, it should be understood that when the rolling robot rolls forward, the housing 1 and the supporting hubs 32 roll forward, while the main supporting member 2 and the external cabin fixed to the main supporting member 2 do not roll with the housing 1 and the supporting hubs 32. Alternatively, the external cabin may not include the shield, but only an external plate or an external frame that can be used to suspend devices (such as external sensors described below).

The external cabin can be provided with an external sensor, and the external sensor can be selected from one or more selected from the group consisting of a GPS positioning module, a six-axis gyro attitude sensor module 14, a wheel speedometer, a camera, a laser radar and a millimeter wave radar. A built-in sensor can be arranged in the housing 1, and the built-in sensor can be selected from one or more selected from the group consisting of a GPS positioning module, a six-axis gyro attitude sensor module 14, and a wheel speedometer. As an example, a GPS positioning module, a six-axis gyro attitude sensor module 14, and a wheel speedometer are installed to the main supporting member 2 in the housing for acquiring the position and attitude of the rolling robot, especially the position and attitude of the main supporting member 2. Specifically, the wheel speedometer calculates the speed and movement distance of the housing 1 through the number of turns and the rotation speed of the motor; the six-axis gyro attitude sensor is used to obtain the rotation angles of the main supporting member 2 in all directions; the GPS positioning module is used to obtain absolute positioning information, which can be integrated with the above two to obtain more accurate position information. As an example, the camera 13, the laser radar 12, and the millimeter-wave radar can be installed in the external cabins on both sides of the housing 1, respectively, for marking their own positions, acquiring environmental information such as image information, and determining their own working state, intelligent human-computer interaction, etc. A model predictive controller, a control circuit board, a communication module and the like can also be arranged in the housing 1. The model predictive controller and the control circuit board are used to control the motion of the rolling robot, and the communication module communicates with a supporting remote controller to control the motion of the rolling robot. The external cabin can also be provided with a light 11 for illumination, as illustrated by Fig. 2.

As illustrated by Fig. 1, the rolling robot according to the present disclosure further includes a pendulum 4, which is connected to the main supporting member 2 through a pendulum bracket 41 which extends in a vertical direction when the rolling robot is stationary, and the pendulum is swingable in the left-right direction relative to the main supporting member 2. Preferably, a lower end of the pendulum 4 is arranged adjacent to a bottom surface of an inner wall of the housing 1, that is, the pendulum is as far away from the geometric center of the rolling robot as possible, so that the torque exerted when the pendulum 4 swings is as large as possible. Preferably, the mass of the pendulum 4 is more than 30% of the total mass of the rolling robot, so that the torque exerted when the pendulum 4 swings is as large as possible.

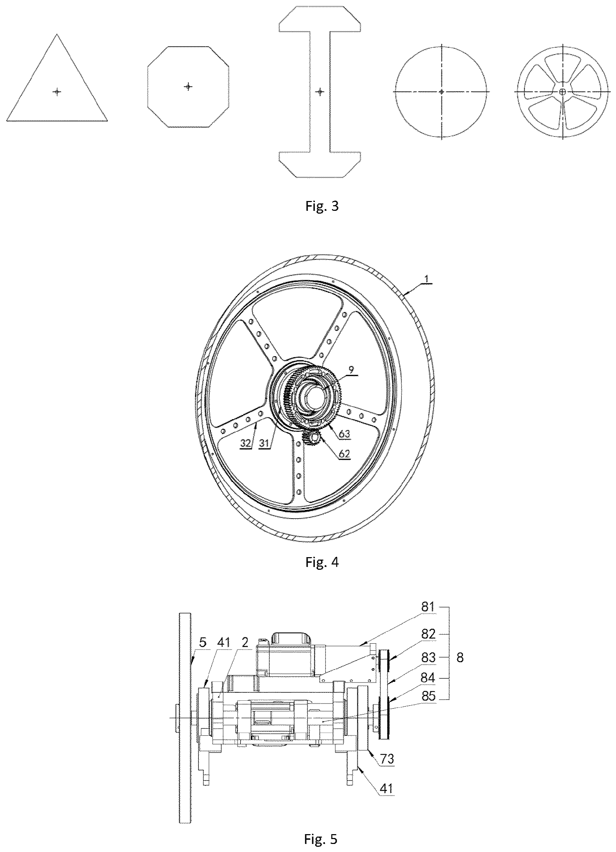

As illustrated by Fig. 1, the rolling robot according to the present disclosure further includes a rotating mass 5 rotatably connected to the main supporting member 2, the rotation axis of the rotating mass 5 extends horizontally in the front-back direction when the rolling robot is stationary. Preferably, the shape of the rotating mass 5 is rotationally symmetric about the rotation axis, the design of rotational symmetry is more conducive to the calculation and control of the moment of inertia of the rotating mass 5. For example, as illustrated by Fig. 3, the shape of the rotating mass 5 can be triangle, octagon, barbell, circle, wheel, etc. Preferably, a greater concentration of mass is distributed in portions farther from the rotation axis compared to portions closer to the rotation axis, so that a greater moment of inertia can be obtained under the same mass. Preferably, the rotating mass 5 is formed in the form of a rigid wheel, having an annular ring arranged at the periphery and a plurality of spokes connecting the annular ring to the rotation axis, as illustrated by Fig. 1, so that more mass is arranged at the periphery, and is rotationally symmetrical and structurally stable. Preferably, a radius of a circumscribed sphere of the rotating mass 5 is 30%-80% of a radius of a circumscribed sphere of the housing 1, such as 40%, 50%, 60%, 70% and 75%, and the larger the radius, the greater the moment of inertia can be obtained. Preferably, a mounting shaft of the rotating mass 5 is on the median axial plane of the housing 1, and a mounting height of the rotating mass 5 is 30%-70% of a total height of the rolling robot, the mounting shaft defines the rotating axis of the rotating mass 5. The central axis plane here refers to a plane perpendicular to the left-right direction and passing through the center of the housing 1. Preferably, the rotating mass 5 is made of tool steel, but it is understood that other materials or combinations of materials with sufficient density are also possible, such as the combination of aluminum pieces and lead blocks. Preferably, the mass of the rotating mass 5 is more than 5% of the total mass of the rolling robot, so that sufficient moment of inertia can be obtained.

The rolling robot according to the present disclosure further includes a main driving assembly 6, for example, the main driving assembly 6 is provided at the intersection of the main supporting member 2 and the supporting hub 32. As an example, as illustrated by Figs. 1 and 4, the main driving assembly 6 may include a main driving motor 61, a main motor gear 62, a driving gear ring 63, and a connection assembly 3. The connection assembly 3 may include a hub connector 31, such as a bearing, to connect the supporting hub 32 to the main supporting member 2. As an example, as illustrated by Fig. 1, a main driving motor 61 is installed at the bottom of the main supporting member 2, a main motor gear 62 is connected to the main driving motor 61, a hub connector 31 is installed inside the supporting hub 32, a driving gear ring 63 is installed inside the hub connector 31, the driving gear ring 63 meshes with the main motor gear 62. When the main driving motor 61 rotates, the front-back position of the mass center of the rolling robot is changed by changing the angles of the main supporting member 2, the pendulum 4 and the rotating mass 5 relative to the housing 1 in the front-back direction through the gear transmission of the main motor gear 62 and the driving gear ring 63, thereby enabling the housing 1 to obtain a forward or backward rolling torque and realizing the forward or backward movement of the rolling robot. The main driving motor 61 used should be equipped with an encoder to detect the traveling state of the pendulum driving motor 71. It should be understood that according to the present disclosure, the main driving motor 61 is needed for driving the rolling robot to move forward and backward, however, the transmission mode may be different from the transmission parts and/or positions in the main driving assembly 6 described above as an example.

The rolling robot according to the present disclosure further includes a pendulum driving assembly 7, for example, the pendulum driving assembly 7 is arranged at the intersection of the main supporting member 2 and the pendulum bracket 41. As an example, as illustrated by Fig. 1, the pendulum driving assembly 7 may include a pendulum driving motor 71, a pendulum motor gear 72, and a pendulum gear ring 73. The main supporting member 2 is a frame structure as illustrated by Fig. 1, for example. The pendulum driving motor 71 is installed inside the main supporting member 2, while the speed change gear set is installed outside the main supporting member 2. The pendulum motor gear 72 is installed on the driving motor 71, and the pendulum gear ring 73 is installed at the root of the pendulum 4 by screws, that is, the pendulum gear ring 73 is fixedly connected to the pendulum 4 at the connection position between the pendulum 4 and the main supporting member 2, the center of the gear ring coincides with the swing axis of the pendulum, and the pendulum gear ring 73 meshes with the pendulum motor gear 72. When the pendulum driving motor 71 rotates, the left-right position of the mass center of the rolling robot is changed by changing the angle of the pendulum 4 relative to the main supporting member 2 and the housing 1 in the left-right direction through the gear transmission of the pendulum motor gear 72 and the pendulum gear ring 73, which cooperates with the main driving motor 61 to drive the rolling robot forward to realize the arc turning of the rolling robot. The used pendulum driving motor 71 should be equipped with an encoder to detect the traveling state of the pendulum driving motor 71. It should be understood that according to the present disclosure, the pendulum driving motor 71 is needed for driving the rolling robot to turn left and right, however, the transmission mode may be different from the transmission parts and/or positions in the pendulum driving assembly 7 described above as an example.

The rolling robot according to the present disclosure further includes a rotating mass driving assembly 8, for example, the rotating mass driving assembly 8 is provided at the intersection of the main supporting member 2 and the rotating mass 5. As an example, as illustrated by Fig. 5, the rotating mass driving assembly 8 may include a rotating mass driving motor 81, a motor synchronous belt wheel 82, a synchronous belt 83, a transmission shaft synchronous belt wheel 84 and a transmission shaft 85. Specifically, the rotating mass driving motor 81 is installed above the main supporting member 2. The transmission shaft 85 passes through the joint of the pendulum 4 and the main supporting member 2, passes through the centroid of the housing 1, and is installed in the main supporting member 2 through a bearing seat. The rotating mass 5 is installed at one end of the transmission shaft 85, the transmission shaft synchronous belt wheel 84 is installed at the other end of the transmission shaft 85, the motor synchronous belt wheel 82 and the synchronous belt 83 are installed at the same side. A rotating mass driving motor 81 is installed at the upper end of the main supporting member 2, the rotating mass driving motor 81 is connected with the motor synchronous belt wheel 82. The rotating mass 5 is driven by the rotating mass driving motor 81 to increase or decrease the rotational speed in the left-right direction, a precise torque in the rolling angle direction is applied to the rolling robot by using the principle of angular moment conservation of the system, so that the rolling angle attitude of the rolling robot is adjusted and the rolling robot is prevented from shaking left and right. Because the installation position of the rotating mass 5 is on the median axial plane of the housing, the kinematics and dynamics models are decoupled. The used rotating mass driving motor 81 should be equipped with an encoder to detect the traveling state of the rotating mass driving motor 81. It should be understood that, according to the present disclosure, the rotating mass driving motor 81 is needed to adjust the rolling angular attitude of the rolling robot, however, the transmission mode may be different from the transmission parts and/or positions in the rotating mass driving assembly 8 described above as an example.

The rolling robot according to the present disclosure may further include a power module 10. The main driving motor 61, the pendulum driving motor 71 and the rotating mass driving motor 81 are electrically connected with the power module 10, the power module 10 is embedded on the pendulum 4 as a part of the pendulum 4. In this way, the mass of the power module 10, which is a burden, can be regarded as a part of the mass required for realizing the movement of the rolling robot, thereby reducing the overall mass of the rolling robot. A shaft sleeve 9 is installed on the outer end face of the main supporting member 2, and the cavity in the shaft is communicated with the inner cavity of the main supporting member 2. The main switch, botton and external sensor signal transmission line all pass through the shaft sleeve 9 to reach the outside of the housing 1, the wiring harnesses are electrically connected with the power module 10.

The working principle of the rolling robot according to the present disclosure will be described in detail below. When the rolling robot according to the present disclosure is used, the movement of the rolling robot is controlled through communication with the remote controller matched with the communication module. When the main driving motor 61 rotates in a clockwise or counterclockwise direction, the angles of the main supporting member 2, the pendulum 4 and the rotating mass 5 relative to the housing 1 are changed through the main motor gear 62 and the driving gear ring 63, so as to change the front-back position of the mass center of the rolling robot, so that the housing 1 can obtain a torque of rolling forward and backward and realize the forward and backward movement of the robot. When the pendulum driving motor 71 rotates in a clockwise or counterclockwise direction, the angle of the pendulum 4 relative to the main supporting member 2 and the housing 1 is changed through the pendulum motor gear 72 and the pendulum gear ring 73, so that the left-right position of the mass center is changed, which cooperates with the main driving motor 61 to realize the arc turning of the robot. When the rotating mass driving motor 81 rotates in a clockwise or counterclockwise direction, the rotating mass driving motor 81 drives the transmission shaft synchronous belt wheel 84 to drive the transmission shaft 85 to rotate in the clockwise or counterclockwise direction, and then drives the rotating mass 5 to undergo accelerating and decelerating rotations in the clockwise or counterclockwise direction, and applies a torque in the rolling angle direction to the rolling robot by using the angular moment conservation, so that the robot can obtain a centripetal acceleration relative to the inertial system. With the cooperation of the left-right swing of the pendulum 4 changed by the pendulum motor gear 72 and the pendulum gear ring 73 during the rotations of the pendulum driving motor 71 in the clockwise or counterclockwise direction, the rolling angle attitude of the platform can be adjusted rapidly by the combined effect.

According to the rolling robot of the present disclosure, the control difficulty is reduced and the control accuracy is improved by linearization control and decoupling of the dynamic model and the kinematic model through the rotating mass 5. The rotating mass driving assembly 8 cooperates with the main driving assembly 6 to update the attitude of the rolling robot in combination with the raw data obtained by the six-axis gyro attitude sensor module 14, and then the sliding mode control method is used to control the attitude balance of the rolling robot, so that the rolling robot can realize high-speed linear motion without jitter. The rotating mass driving assembly 8 cooperates with the pendulum driving assembly 7 and the main driving assembly 6 to work in coordination with each other, the housing 1 is driven to move in different ways by using the compound sliding mode control method. By adjusting the rotating speed of the rotating mass 5 and the lifting height of the pendulum 4 at the same time, the rolling robot can achieve brief on-the-spot rotation or stable curved turning of the rolling robot without jitter.

The beneficial effects of the rolling robot according to the present disclosure will be described and explained in detail below.

According to the rolling robot of the present disclosure, the rotating mass 5 and the rotating mass driving assembly 8 are added, which is a pioneering technical solution adopted by the inventors of the present disclosure after repeated research and experiments to solve the problem that the rolling robot is difficult to control, especially the high-speed motion jitter. Due to various contradictions in the dual control of the rotating mass 5 and the pendulum 4, they should not be used at the same time, and the creation of the present disclosure lies in understanding and utilizing the contradictions between them.

One of the contradictions between the rotating mass 5 and the pendulum 4 is: the acceleration and deceleration movement of the rotating mass 5 in the clockwise or counterclockwise direction and the left and right movement of the pendulum 4 will affect the rolling angle of the rolling robot, the torques formed by the two mechanisms are applied around the forward direction of the rolling robot, which makes the rolling robot tilt left and right, so the rotating mass 5 and the pendulum 4 will inevitably interfere with each other in the control process, resulting in contradictory and antagonistic effects. Therefore, it is generally not considered that the rotating mass 5 and the pendulum 4 are used together.

The second contradiction between the rotating mass 5 and the pendulum 4 is: when the rotating mass 5 moves, the torque is obtained with the ground contact point of the robot as the fulcrum, because the formula of moment of inertia I=m×r^2, the moment of inertia is directly proportional to the mass and the square of the radius of rotation. Therefore, in order to achieve a larger moment of inertia, it is needed for the rotating mass 5 to have a larger weight and a higher gravity center, and the larger moment of inertia, the more energy it can carry at the same rotational speed, and the longer the rotating mass 5 can output torque in a single direction. This enhances its ability to influence the robot and improves control effectiveness. Both the rotating mass 5 and the pendulum 4 are installed on the main supporting member 2 in the housing 1, which means that the weight and height required by the rotating mass 5 to improve the performance will shift the gravity center of the mechanism to the centroid, thus weakening the motion performance provided by the main driving motor 61. Both the rotating mass 5 and the pendulum 4 require the mass ratio, and the higher the installation position of the rotating mass 5, the better the control effect, and the lower the installation position of the pendulum 4, the better the control effect. These two mechanisms are contradictory to each other. Therefore, it is usually not considered to use both the rotating mass and the pendulum together.

According to the rolling robot of the present disclosure, the rotating mass 5 is added, so that the control limitation of the pendulum 4 is liberated, thereby improving the output capacity of the original pendulum 4, being able to be lifted by a higher angle and output a larger torque. At the same time, the rotating mass 5 is used to suppress the precession effect of the rolling robot in the forward process and solve the sloshing problem. Due to the decoupling of the model, the control difficulty and cost are greatly reduced. At the same time, due to the superiority of rotating mass 5 in suppressing high-frequency noise, the rolling robot can break through the original speed limit, the upper speed limit is increased by more than four times, reaching a speed close to 30 kilometers per hour, and there is almost no jitter in the rolling angle.

In addition, when the rolling robot is moving, the main driving motor 61 rotates, which pulls the whole main supporting member 2 and all mechanisms fixedly connected to the main supporting member 2 to rotate around the rotating shaft of the housing 1. In this process, the gravity center of the whole rolling robot changes, which drives the housing 1 to rotate, thus realizing the forward and backward movement of the robot. Due to the physical requirements of the motion principle, the further the overall gravity center of the main supporting member 2 and all mechanisms fixedly connected to it deviate from the centroid of the housing, and the greater the proportion of the overall weight of the robot, the greater the change of the gravity center of the rolling robot and the better the motion performance of the rolling robot is got when the main driving motor 61 rotates at the same angle. The pendulum 4 is mounted on the bottom of the main supporting member 2, so the greater the weight of the pendulum 4 which is farthest away from the centroid of the housing in a whole mechanism, the better the motion performance of the rolling robot will be. Therefore, the lower end of the pendulum 4 is located adjacent to the bottom surface of the inner wall of the housing 1, and the mass of the pendulum 4 is more than 30% of the total mass of the rolling robot. The power module 10 is embedded on the pendulum 4 as a part of the pendulum 4, which is beneficial to the motion performance of the rolling robot.

The exemplary implementation of the rolling robot proposed by the present disclosure has been described in detail above with reference to the preferred embodiment. However, it can be understood by those skilled in the art that various variations and modifications can be made to the above specific embodiment without departing from the concept of the present disclosure, and various technical features and structures proposed by the present disclosure can be combined in various ways without exceeding the protection scope of the present disclosure.

## Claims

1. A rolling robot, comprising:
a housing, formed in a shape of a rotational body, wherein a distance between an outer surface of a rolling surface of the housing and a rotation axis is gradually reduced from middle to two sides;
two supporting hubs, fixed to the two sides of the housing, wherein outer surfaces of the two supporting hubs and the housing form a part of a rolling shape of the rolling robot;
a main supporting member, extending horizontally in a left-right direction in the housing and connected to the two supporting hubs through bearings at two ends of the main supporting member, so that the housing and the two supporting hubs are capable of rotating relative to the main supporting member;
a pendulum, connected to the main supporting member through a pendulum bracket which extends in a vertical direction when the rolling robot is stationary, the pendulum being swingable in the left-right direction relative to the main supporting member;
a rotating mass, rotatably connected to the main supporting member with a rotation axis extending horizontally in a front-back direction when the rolling robot is stationary, the front-back direction being perpendicular to the left-right direction and the vertical direction;
a main driving motor, configured to drive the main supporting member, the pendulum and the rotating mass to rotate in the front-back direction;
a pendulum driving motor, configured to drive the pendulum to swing in the left-right direction relative to the main supporting member; and
a rotating mass driving motor, configured to drive the rotating mass to rotate in the left-right direction relative to the main supporting member.

2. The rolling robot according to claim 1, wherein,
the main driving motor is configured to change a front-back position of a mass center of the rolling robot by changing angles of the main supporting member, the pendulum and the rotating mass relative to the housing, so that the housing obtains a torque of rolling forward and backward and realize a front-back movement of the rolling robot;
the pendulum driving motor is configured to change a left-right position of the mass center of the rolling robot by changing an angle of the pendulum relative to the main supporting member and the housing; the rotating mass driving motor is configured to apply a torque in a rolling angle direction to the rolling robot by causing the rotating mass to undergo accelerating and decelerating rotations in a clockwise or counterclockwise direction, a change of the left-right position of the mass center of the robot and the accelerating and decelerating rotations in the clockwise or counterclockwise direction of the rotating mass work together to change a rolling angle of the robot, so as to achieve a rolling angle attitude control of the robot and achieve an attitude stability control of an arc turning and a linear motion of the rolling robot.

3. The rolling robot according to claim 1 or 2, wherein a shape of the rotating mass is rotationally symmetrical with respect to the rotation axis, a greater concentration of mass is distributed in portions farther from the rotation axis compared to portions closer to the rotation axis.

4. The rolling robot according to claim 3, wherein the rotating mass is formed in a form of a rigid wheel, which comprises an annular ring arranged at a periphery and a plurality of spokes connecting the annular ring to the rotation axis.

5. The rolling robot according to any one of claims 1-4, wherein a radius of a circumscribed sphere of the rotating mass is 30%-80% of a radius of a circumscribed sphere of the housing.

6. The rolling robot according to any one of claims 1-5, wherein a mounting shaft of the rotating mass is on a median axial plane of the housing, a mounting height of the rotating mass is 30%-70% of a total height of the rolling robot, the mounting shaft defines the rotation axis.

7. The rolling robot according to any one of claims 1-6, wherein the rotating mass is made of tool steel.

8. The rolling robot according to any one of claims 1-7, wherein a lower end of the pendulum is arranged adjacent to a bottom surface of an inner wall of the housing.

9. The rolling robot according to any one of claims 1-8, wherein a mass of the pendulum is more than 30% of a total mass of the rolling robot, a mass of the rotating mass is more than 5% of the total mass of the rolling robot.

10. The rolling robot according to any one of claims 1-9, further comprising a power supply module for supplying power to the main driving motor, the pendulum driving motor and the rotating mass driving motor, wherein the power supply module is embedded in the pendulum as a part of the pendulum.

11. The rolling robot according to any one of claims 1-10, further comprising an external cabin fixed to the main supporting member at an outer side of the supporting hubs, wherein the external cabin comprises an external board and a shield fixed to the external board, the shield and the outer surfaces of the supporting hubs and the housing form the rolling shape of the rolling robot,
the external cabin is provided with an external sensor, and the external sensor is selected from one or more selected from the group consisting of a GPS positioning module, a six-axis gyro attitude sensor module, a wheel speedometer, a camera, a laser radar, a millimeter wave radar,
a built-in sensor is arranged in the housing, the built-in sensor is selected from one or more selected from the group consisting of a GPS positioning module, a six-axis gyro attitude sensor module and a wheel speedometer.

12. The rolling robot according to any one of claims 1-11, wherein the housing has a left-right symmetrical structure, and the housing is formed into the following shapes or a part of the following shapes: a spherical shape, an ellipsoid shape, and a transverse drum shape.
